# EUROPÄISCHE PATENTSCHRIFT

(11) **EP 1 537 943 B1**
(45) Veröffentlichungstag und Bekanntmachung des Hinweises auf die Patenterteilung: **06.12.2006**
(21) Anmeldenummer: 03024156.6
(22) Anmeldetag: 20.10.2003
(51) Int. Cl.: B23Q 1/66, B23Q 1/54, B23Q 11/00, B23Q 7/02

(54) **Werkzeugmaschine mit torsionskompensiertem Doppelschwenktisch**
Machine tool with torsion compensated double tilt worktable
Machine-outil avec table rotative double compensée en torsion

(43) Veröffentlichungstag der Anmeldung: 08.06.2005
(73) Patentinhaber: Schwäbische Werkzeugmaschinen GmbH, 78713 Schramberg-Waldmössingen (DE)
(72) Erfinder: Armleder, Wolfgang, 78628 Rottweil (DE); Maier, Markus, 78737 Fluorn-Winzeln (DE)
(74) Vertreter: Kohler Schmid Möbus

(56) Entgegenhaltungen:
- EP-A- 1 285 721
- DE-A- 19 907 617
- US-A- 5 988 959
- PATENT ABSTRACTS OF JAPAN vol. 2000, no. 16, 8. Mai 2001 (2001-05-08) & JP 2001 009653 A (TOYODA MACH WORKS LTD), 16. Januar 2001 (2001-01-16)

## Beschreibung

Die vorliegende Erfindung betrifft eine Werkzeugmaschine gemäss dem Oberbegriff des Anspruchs 1, die einen Doppelschwenktisch mit einem um eine horizontale Achse gelagerten Doppelschwenkträger und mit zwei Schwenktischen umfasst, die am Doppelschwenkträger jeweils in zwei Lagern um eine horizontale Achse gelagert sind, wobei der eine Schwenktisch als Bearbeitungsseite und der andere Schwenktisch als Bestückungsseite durch Verschwenken des Doppelschwenkträgers vertauschbar sind.

Eine derartige Werkzeugmaschine ist beispielsweise durch die DE 199 07 617 A1 bekannt geworden.

Die aus DE 199 07 617 A1 bekannte Werkzeugmaschine hat einen im Maschinengestell um eine horizontale Achse schwenkbar gelagerten Doppelschwenktisch, dessen einer Schwenktisch als Bearbeitungsseite und dessen anderer Schwenktisch als Bestückungsseite vorgesehen ist. Die Bearbeitungs- und Bestückungsseiten sind durch eine Spritzschutzscheibe voneinander getrennt und können durch Verschwenken des Doppelschwenktisches vertauscht werden. Da die Schwenktische bezüglich ihrer Schwenkachsen außermittig angeordnet sein können, erzeugen sie jeweils ein auf ihre Schwenkachsen wirkendes Gewichts- bzw. Drehmoment, welches insbesondere bei einem einseitigen Drehantrieb zu einer Torsion der Schwenktische um ihre Schwenkachsen und folglich zu einer verringerten Bearbeitungsgenauigkeit führt.

Weiterhin ist aus EP-1285721-A eine Werkzeugmaschine mit einem exzentrischen Arbeitstisch und einer Balanceeinrichtung bekannt, die das Gewicht des Arbeitstisches ausgleicht und Effekte, welche aufgrund der am Arbeitstisch exzentrisch zu dessen Schwenkachse angreifenden Gewichtskraft auftreten, kompensiert.

Demgegenüber ist es die Aufgabe der vorliegenden Erfindung, bei einer Werkzeugmaschine der eingangs genannten Art das auf die Schwenktische wirkende Gewichts- bzw. Drehmoment zu reduzieren bzw. zu eliminieren.

Diese Aufgabe wird erfindungsgemäß dadurch gelöst, dass am Doppelschwenkträger mindestens eine doppelt wirkende Krafterzeugungseinrichtung abgestützt ist, die am Schwenktisch exzentrisch zu dessen Schwenkachse angreift, und dass die doppelt wirkende Krafterzeugungseinrichtung als hydraulische oder pneumatische Zylindereinrichtung mit einem doppelt wirkenden Zylinder ausgebildet ist, der ein Flächenverhältnis von etwa 1:2 aufweist.

Erfindungsgemäß wird das Gewichtsmoment des Schwenktisches kompensiert und folglich der jeweilige Drehantrieb entlastet.

In einer bevorzugten Ausführungsform der Erfindung ist für jeden Schwenktisch am Doppelschwenkträger ein einziger Drehantrieb vorgesehen und die doppelt wirkende Krafterzeugungseinrichtung auf der dem Drehantrieb gegenüberliegenden Lagerseite des Schwenktisches angeordnet. Diese Maßnahme hat den Vorteil, dass eine Torsion des Schwenktisches um seine Schwenkachse sowohl auf der Bestückungsseite als auch auf der Bearbeitungsseite kompensiert werden kann.

In einer anderen bevorzugten Ausführungsform der Erfindung sind auf beiden Lagerseiten eines Schwenktisches jeweils ein Drehantrieb am Doppelschwenkträger vorgesehen.

Vorteilhafte Ausgestaltungen der Erfindung sind Gegenstand der Unteransprüche.

Weitere Vorteile der Erfindung ergeben sich aus der Beschreibung und der Zeichnung. Die gezeigten und beschriebenen Ausführungsformen sind nicht als abschließende Aufzählung zu verstehen, sondern haben vielmehr beispielhaften Charakter für die Schilderung der Erfindung.

Es zeigt:
- Fig. 1: die erfindungsgemäße Werkzeugmaschine mit einem Doppelschwenktisch als Werkstückträger in einer Schnittansicht;
- Fig. 2: einen der beiden Schwenktische des in Fig. 1 gezeigten Doppelschwenktisches in einer Frontansicht, wobei eine Krafterzeugungsvorrichtung lediglich angedeutet ist;
- Fig. 3: den in Fig. 2 gezeigten Schwenktisch mit einem doppelt wirkenden Zylinder in einer Seitenansicht gemäß III-III in Fig. 2;
- Fig. 4: den hydraulischen Schaltplan zum Ansteuern des doppelt wirkenden Zylinders der Fig. 3; und
- Fig. 5: eine Variante der erfindungsgemäßen Werkzeugmaschine in einer Darstellung analog zu Fig. 2.

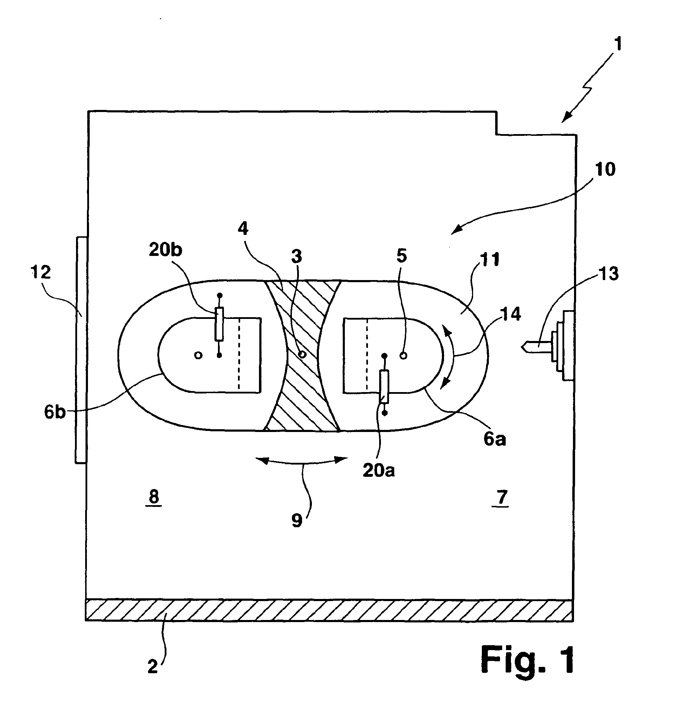

Die in **Fig. 1** insgesamt mit **1** bezeichnete Werkzeugmaschine umfasst einen im rahmenartigen Maschinengestell **2** um eine horizontale Achse **3** gelagerten Doppelschwenkträger **4** mit zwei jeweils um eine horizontale Achse **5** verschwenkbaren Schwenktischen **6a, 6b.** Der eine Schwenktisch 6a (in Fig. 1 der rechte) ist auf der Bearbeitungsseite **7** und der andere Schwenktisch 6b auf der Bestückungsseite **8** vorgesehen. Durch Verschwenken (Pfeilrichtung **9**) des Doppelschwenkträgers 4 um die Schwenkachse 3 lassen sich die Bearbeitungs- und Bestückungsseiten der Schwenktische 6a, 6b vertauschen. Der Doppelschwenkträger 4 bildet zusammen mit den beiden Schwenktischen 6a, 6b den in Fig. 1 insgesamt mit **10** bezeichneten Doppelschwenktisch.

Die beiden Schwenktische 6a, 6b sind zwischen und an zwei Seitenwangen **11** des Doppelschwenkträgers 4 jeweils um die Schwenkachse 5 verschwenkbar gelagert. Der Schwenktisch 6b wird bei geöffneter Beladetür **12** mit neuen Werkstücken bestückt, die dann nach Vertauschen der Schwenktische 6a, 6b auf der Bearbeitungsseite 7 bearbeitet werden. Die Bearbeitung erfolgt mittels eines oder mehrerer Werkzeuge, die jeweils in einer oder mehreren horizontalen Arbeitsspindeln **13** aufgenommen sind. Bei anderen nicht gezeigten Ausführungsformen können die Arbeitsspindel bzw. -spindeln 13 auch vertikal angeordnet sein. Zum Vertauschen der Schwenktische 6a, 6b werden sowohl beide Schwenktische 6a, 6b um ihre Schwenkachsen 5 in Schwenkrichtung **14** als auch der Doppelschwenkträger 4 um seine Schwenkachse 3 in Schwenkrichtung 9 jeweils um 180° geschwenkt, wodurch sich mit vertauschten Schwenktischen 6a, 6b wieder die in Fig. 1 gezeigte Anordnung ergibt.

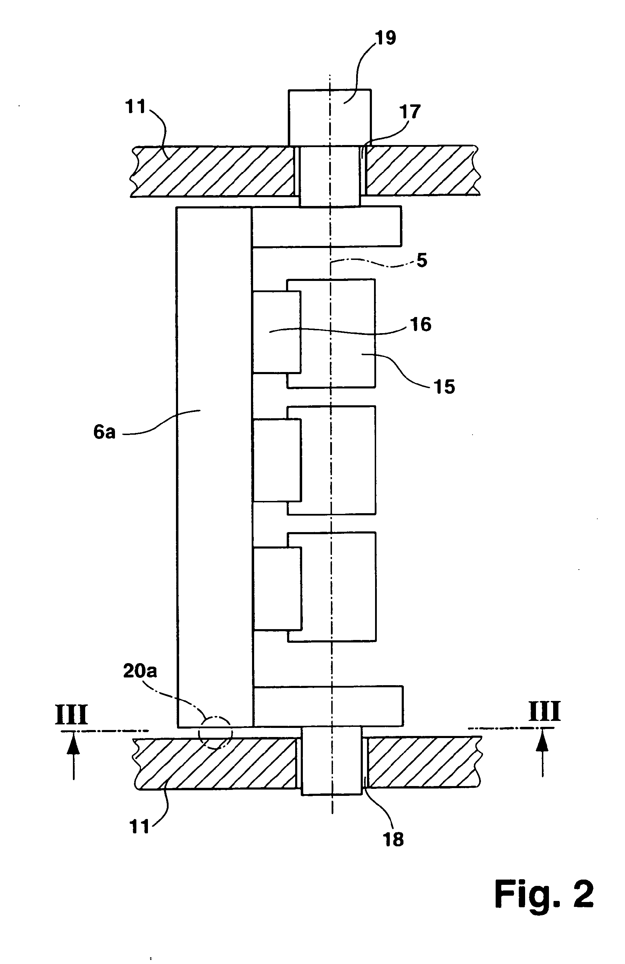

**Fig. 2** zeigt den mit Werkstücken **15** bestückten Schwenktisch 6a in einer Frontansicht, wobei die Werkstücke 15 über Halteeinrichtungen **16** auf den Schwenktisch 6a eingespannt sind. Der Schwenktisch 6a ist in zwei Lagern **17, 18,** die in den Seitenwangen 11 vorgesehen sind, um die Schwenkachse 5 gelagert und durch einen Drehantrieb **19** verschwenkbar, der am Doppelschwenkträger 4 auf der Seite des Lagers 17 angeordnet ist. Die Werkstücke 15 werden möglichst mittig in der Schwenkachse 5 positioniert, um Positionierabweichungen der Schwenkachse 5 bezüglich der Werkstücke 15 zu minimieren. Das hat zur Folge, dass der außermittig angeordnete Schwenktisch 6a ein auf die Schwenkachse 5 wirkendes Gewichts- bzw. Drehmoment erzeugt, welches einen sinusförmigen Verlauf bei Drehung des Schwenktisches 6a um die Schwenkachse 5 hat. Dieses Gewichtsmoment würde zu einer hohen Stillstandsbelastung des Drehantriebs 19 und, da der Drehantrieb 19 einseitig mit dem Werkstücktisch 6a zusammenwirkt, zu einer Torsion des gesamten Schwenktisches 6a um die Schwenkachse 5 führen mit der Folge, dass sich die Bearbeitungsgenauigkeit verringern würde.

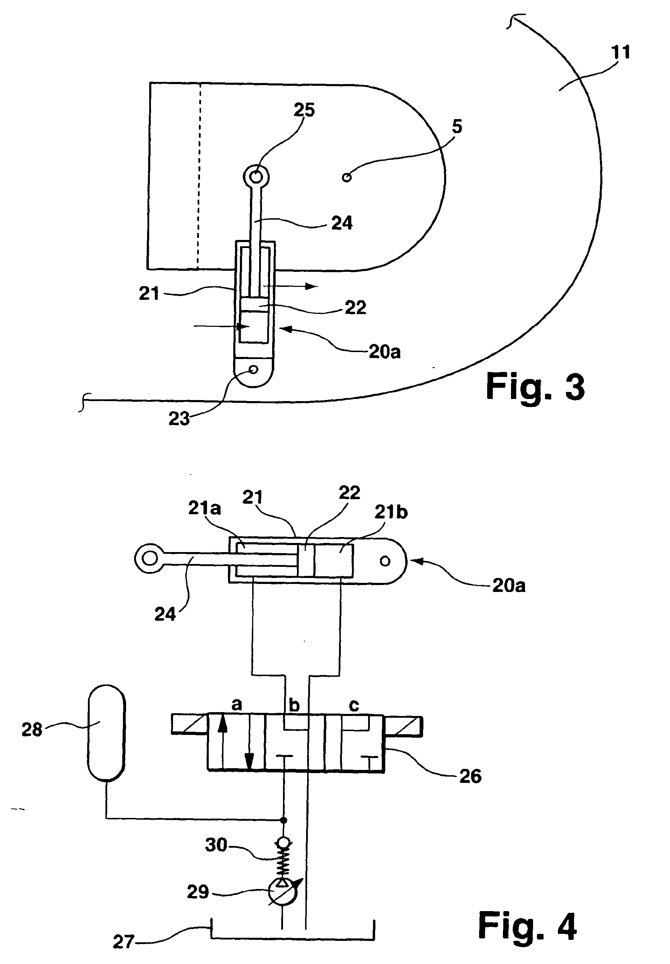

Um eine solche Torsion des Schwenktisches 6a zu verhindern, ist auf der dem Drehantrieb 19 gegenüberliegenden Seite des Schwenktisches 6a eine doppelt wirkende Krafterzeugungseinrichtung **20a** (**Fig. 3**) vorgesehen, die das am Schwenktisch 6a wirkende Gewichtsmoment kompensiert. Die Krafterzeugungseinrichtung 20a ist durch eine Zylindereinrichtung mit einem doppelt wirkenden Zylinder **21** und einem darin verschiebbar geführten Kolben **22** gebildet. Der Zylinder 21 ist bei **23** mit der dem Drehantrieb 19 gegenüberliegenden Seitenwange 11 und die Kolbenstange **24** des Kolbens 22 bei **25** mit dem Schwenktisch 6a exzentrisch zu dessen Schwenkachse 5 gelenkig verbunden. Der Zylinder 21 hat ein Flächenverhältnis von 1:2, d.h., die kolbenstangenseitige Arbeitsfläche des Kolbens 22 ist halb so groß wie seine andere Arbeitsfläche.

Wie in **Fig. 4** gezeigt, wird der doppelt wirkende Zylinder 21 mittels eines 4/3-Wege-Steuerventils (Magnetventil) **26** gesteuert. In der gezeigten mittleren Ventilstellung **b** des Steuerventils 26 sind beide Zylinderkammern **21a, 21b** mit einem Hydraulikflüssigkeit-Vorratstank **27,** d.h. mit der Niederdruckseite, verbunden, so dass die Krafterzeugungseinrichtung 20a außer Kraft gesetzt ist. In der Ventilstellung **a** ist die kolbenstangenseitigen Zylinderkammer 21a mit einem Druckspeicher **28,** d.h. mit der Hochdruckseite, und die andere Zylinderkammer 21b mit dem Vorratstank 27 verbunden, so dass die Kolbenstange 24 mit einer Kraft F in den Zylinder 21 einfährt. In der Ventilstellung **c** sind beide Zylinderkammern 21a, 21b an den Druckspeicher 28 angeschlossen, so dass wegen des Flächenverhältnisses von 1:2 die Kolbenstange 24 mit der Kraft F aus dem Zylinder 21 ausfährt. Die Hydraulikflüssigkeit wird aus dem Vorratstank 27 durch eine Hochdruckpumpe **29** in den Druckspeicher 28 gefördert, wobei ein Rückflussverhinderungsventil **30** den Rückfluss der Hydraulikflüssigkeit in den Vorratstank 27 verhindert. Der Druck der Hochdruckpumpe 29 ist verstellbar, um die von der Krafterzeugungseinrichtung 20a erzeugte Kraft variabel einstellen zu können.

Die Funktionsweise der doppelt wirkenden Krafterzeugungseinrichtung 20 ist wie folgt:
In der in Fig. 1 gezeigten Schwenkendstellung des Doppelschwenktisches 10 ist die mit dem Schwenktisch 6a zusammenwirkende Krafterzeugungseinrichtung 20a an der Seitenwange 11 unterhalb des Schwenktisches 6a und die mit dem Schwenktisch 6b zusammenwirkende Krafterzeugungseinrichtung **20b** an der Seitenwange 11 oberhalb des Schwenktisches 6b abgestützt. Das Steuerventil 26 der Krafterzeugungseinrichtung 20a ist auf Ventilstellung c geschaltet, um den Schwenktisch 6a nach oben zu drücken und so das Gewichtmoment des Schwenktisches 6a zu kompensieren. Das Steuerventil 26 der Krafterzeugungseinrichtung 20b ist auf Ventilstellung a geschaltet, um den Schwenktisch 6b nach oben zu ziehen und so das Gewichtmoment des Schwenktisches 6b zu kompensieren. Durch Verschwenken der Schwenktische 6a, 6b um ihre Schwenkachsen 5 und des Doppelschwenkträgers 4 um seine Schwenkachse 3 jeweils um 180° ergibt sich mit vertauschten Schwenktischen 6a, 6b wieder die in Fig. 1 gezeigte Anordnung, d.h. die andere Schwenkendstellung des Doppelschwenktisches 10. Die Umsteuerung der Steuerventile 26 zwischen den Ventilstellungen a und c erfolgt dabei zeitnah mit dem Verschwenken der Schwenktische 6a, 6b und des Doppelschwenkträgers 4. Alternativ können während des Verschwenkens der Schwenktische 6a, 6b und des Doppelschwenkträgers 4 die Krafterzeugungseinrichtungen 20a, 20b durch Schalten der Steuerventile 26 auf die Ventilstellung b außer Kraft gesetzt und dabei gleichzeitig die Schwenktische 6a, 6b durch eine geeignete Klemmeinrichtungen gehalten werden.

Anstelle des doppelt wirkenden Zylinders 21 können auch zwei einfachwirkende Zylinder vorgesehen sein, die mit entgegengesetzter Wirkrichtung am Schwenktisch 6a, 6b angreifen. Weiterhin kann die Ansteuerung der Zylindereinrichtung auch pneumatisch erfolgen.

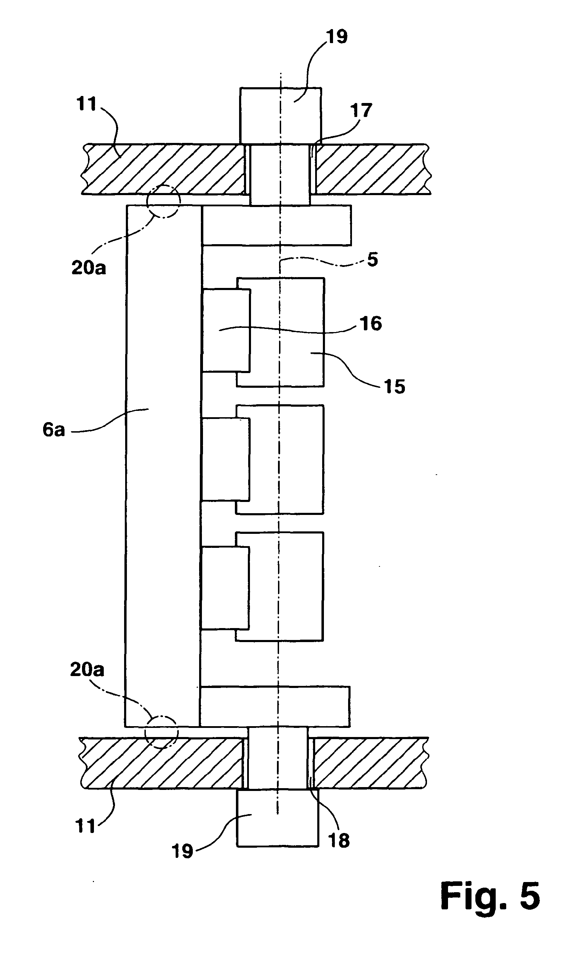

Bei der in **Fig. 5** gezeigten Variante sind auf beiden Lagerseiten des Schwenktisches 6a jeweils ein Drehantrieb 19 und eine doppelt wirkende Krafterzeugungseinrichtung 20a vorgesehen, um das Gewichtsmoment des Schwenktisches 6a zu kompensieren und dadurch die Drehantriebe 19 zu entlasten.

## Patentansprüche

1. Werkzeugmaschine (1), umfassend einen Doppelschwenktisch (10) mit einem um eine horizontale Achse (3) gelagerten Doppelschwenkträger (4) und mit zwei Schwenktischen (6a, 6b), die am Doppelschwenkträger (4) jeweils in zwei Lagern (17, 18) um eine horizontale Achse (5) gelagert sind, wobei der eine Schwenktisch (6a) als Bearbeitungsseite (7) und der andere Schwenktisch (6b) als Bestückungsseite (8) durch Verschwenken des Doppelschwenkträgers (4) vertauschbar sind,
**dadurch gekennzeichnet,**
**dass** am Doppelschwenkträger (4) mindestens eine doppelt wirkende Krafterzeugungseinrichtung (20a, 20b) abgestützt ist, die am Schwenktisch (6a, 6b) exzentrisch zu dessen Schwenkachse (5) angreift, und dass die doppelt wirkende Krafterzeugungseinrichtung als hydraulische oder pneumatische Zylindereinrichtung mit einem doppelt wirkenden Zylinder ausgebildet ist, der ein Flächenverhältnis von etwa 1:2 aufweist.

2. Werkzeugmaschine nach Anspruch 1, **dadurch gekennzeichnet, dass** für jeden Schwenktisch (6a, 6b) am Doppelschwenkträger (4) ein einziger Drehantrieb (19) vorgesehen ist und dass die doppelt wirkende Krafterzeugungseinrichtung (20a, 20b) auf der dem Drehantrieb (19) gegenüberliegenden Lagerseite des Schwenktisches (6a, 6b) angeordnet ist.

3. Werkzeugmaschine nach Anspruch 1, **dadurch gekennzeichnet, dass** auf beiden Lagerseiten eines Schwenktisches (6a, 6b) jeweils ein Drehantrieb (19) am Doppelschwenkträger (4) und eine doppelt wirkende Krafterzeugungseinrichtung (20a, 20b) vorgesehen sind.

4. Werkzeugmaschine nach einem der vorhergehenden Ansprüche, **dadurch gekennzeichnet, dass** die doppelt wirkende Krafterzeugungseinrichtung (20a, 20b) in den beiden Schwenkendstellungen des Doppelschwenktisches (10) zumindest für eine Teilkompensation des auf den Schwenktisch (6a, 6b) wirkenden Drehmoments aktiviert ist.

5. Werkzeugmaschine nach einem der vorhergehenden Ansprüche, **dadurch gekennzeichnet, dass** die doppelt wirkende Krafterzeugungseinrichtung (20a, 20b) mit dem Doppelschwenkträger (4) und dem Schwenktisch (6a, 6b) gelenkig verbunden ist.

6. Werkzeugmaschine nach einem der vorhergehenden Ansprüche, **dadurch gekennzeichnet, dass** die doppelt wirkende Krafterzeugungseinrichtung (20a, 20b) durch ein Steuerventil (26) gesteuert ist.

## Claims

1. Machine tool (1) comprising a double tilt worktable (10) with a double tilt support (4) which is disposed about a horizontal axis (3), and with two tilt worktables (6a, 6b) each of which is disposed in two bearings (17, 18) on the double tilt support (4) about a horizontal axis (5), wherein one tilt worktable (6a) as processing side (7) and the other tilt worktable (6b) as loading side (8) can be exchanged through pivoting the double tilt support (4), **characterized in that** at least one double-acting force-generating means (20a, 20b) is supported on the double tilt support (4) and engages the tilt worktable (6a, 6b) eccentrically to its pivot axis (5), the double-acting force-generating means being designed as hydraulic or pneumatic cylinder means with a double-acting cylinder having an area ratio of approximately 1:2.

2. Machine tool according to claim 1, **characterized in that** one single rotary drive (19) is provided on the double tilt support (4) for each tilt worktable (6a, 6b) and the double-acting force-generating means (20a, 20b) is disposed on the bearing side of the tilt worktable (6a, 6b) opposite to the rotary drive (19).

3. Machine tool according to claim 1, **characterized in that** a rotary drive (19) on the double tilt support (4) and a double-acting force-generating means (20a, 20b) are provided on each bearing side of a tilt worktable (6a, 6b).

4. Machine tool according to any one of the preceding claims, **characterized in that** the double-acting force-generating means (20a, 20b) is activated at least for partial compensation of the torque acting on the tilt worktable (6a, 6b) in both tilt end positions of the double tilt worktable (10).

5. Machine tool according to any one of the preceding clams, **characterized in that** the double-acting force-generating means (20a, 20b) is linked to the double tilt support (4) and the tilt worktable (6a, 6b).

6. Machine tool according to any one of the preceding claims, **characterized in that** the double-acting force-generating means (20a, 20b) is controlled by a control valve (26).

## Revendications

1. Machine-outil (1) comprenant une double table pivotante (10) avec un double support pivotant (4) monté autour d'un axe (3) horizontal et avec deux tables pivotantes (6a, 6b) qui sont montées sur le double support pivotant (4) dans deux paliers (17, 18) respectifs autour d'un axe horizontal (5), dans laquelle ladite une table pivotante (6a) servant de côté usinage (7) et l'autre table pivotante (6b) servant de côté chargement (8) sont interchangeables par pivotement du double support pivotant (4), **caractérisée en ce que** sur le double support pivotant (4) prend appui au moins un dispositif de production de force à double effet (20a, 20b) qui attaque la table pivotante (6a, 6b) de manière excentrique par rapport à son axe de pivotement (5), et **en ce que** le dispositif de production de force à double effet est réalisé sous forme de dispositif à cylindre hydraulique ou pneumatique avec un cylindre à double effet qui présente un rapport de surface d'approximativement 1:2.

2. Machine-outil selon la revendication 1, **caractérisée en ce que** pour chaque table pivotante (6a, 6b), un seul entraînement rotatif (19) est prévu sur le double support pivotant (4), et **en ce que** le dispositif de production de force à double effet (20a, 20b) est agencé sur le côté palier, opposé à l'entraînement rotatif (19), de la table pivotante (6a, 6b).

3. Machine-outil selon la revendication 1, **caractérisée en ce que** sur les deux côtés palier d'une table pivotante (6a, 6b) sont prévus respectivement un entraînement rotatif (19) sur le double support pivotant (4) et un dispositif de production de force à double effet (20a, 20b).

4. Machine-outil selon l'une des revendications précédentes, **caractérisée en ce que** le dispositif de production de force à double effet (20a, 20b) est activé dans les deux positions de pivotement de la double table pivotante (10) au moins pour une compensation partielle du couple de rotation agissant sur la table pivotante (6a, 6b).

5. Machine-outil selon l'une des revendications précédentes, **caractérisée en ce que** le dispositif de production de force à double effet (20a, 20b) est relié de manière articulée au double support pivotant (4) et à la table pivotante (6a, 6b).

6. Machine-outil selon l'une des revendications précédentes, **caractérisée en ce que** le dispositif de production de force à double effet (20a, 20b) est commandé par une soupape de commande (26).
